# FASCICULE DE BREVET EUROPEEN

(11) **EP 1 595 763 B1**
(45) Date de publication et mention de la délivrance du brevet: **14.05.2008**
(21) Numéro de dépôt: 05300373.7
(22) Date de dépôt: 12.05.2005
(51) Int. Cl.: B60T 7/10, B60T 13/74

(54) **Dispositif pour commander un frein de stationnement électrique et véhicule comportant un tel dispositif**
Vorrichtung zur Betätigung einer elektrischen Feststellbremse und Fahrzeug mit einer solchen Vorrichtung
device for controlling an electrical park-brake and vehicle incorporating such a device

(30) Priorité: 13.05.2004 FR 0450939
(43) Date de publication de la demande: 16.11.2005
(73) Titulaire: Peugeot Citroen Automobiles SA, 78943 Vélizy-Villacoublay Cedex (FR)
(72) Inventeur: Krapf, Pascal, 78000, Versailles (FR)

(56) Documents cités:
- EP-A- 1 128 999
- DE-A- 19 718 679
- DE-A- 19 751 431
- DE-A- 19 962 556

## Description

L'invention se rapporte à un dispositif pour commander un frein de stationnement électrique ainsi qu'à un véhicule comportant un tel dispositif.

L'invention concerne plus particulièrement un dispositif pour commander un frein de stationnement électrique comportant un dispositif d'entrée pour enregistrer un souhait d'un utilisateur concernant un actionnement du frein de stationnement, un organe de commande électronique pour détecter le souhait de l'utilisateur au moyen de signaux correspondant du dispositif d'entrée et pour commander au moins un frein de stationnement, le dispositif d'entrée comportant des moyens de commutation électriques ayant plusieurs positions de commutation.

Un tel dispositif est connu notamment du document EP 1 128 999. Dans ce dispositif, les moyens de commutation sont couplés à des commutateurs qui sont agencés de façon redondante et qui sont disposés dans des plans de commutation fonctionnant en parallèle.

Cette solution présente l'inconvénient d'avoir une mauvaise synchronisation entre les deux commutateurs susceptible de créer une incohérence entre les signaux, qui se traduit par une mise en défaut du système. Ce problème peut être résolu en augmentant le point dur au niveau de la cinétique des moyens de commande. De cette façon, l'inertie produite permet de synchroniser le basculement des commutateurs redondants. En revanche, l'utilisateur doit exercer un effort relativement important pour actionner la commande, ce qui dégrade le confort d'utilisation au niveau de l'ergonomie.

De plus, ce système s'avère complexe et coûteux, notamment à cause de la multitude de pièces électriques et électroniques nécessaires pour l'agencement des commutateurs de façon redondante et la réalisation de plans de commutation en parallèle. Par ailleurs, un système aussi complexe est fortement susceptible de subir des défaillances.

Un but de la présente invention est de pallier tout ou partie des inconvénients de l'art antérieur relevés ci-dessus.

A cette fin, le dispositif pour commander un frein de stationnement électrique selon l'invention, par ailleurs conforme à la définition générique qu'en donne le préambule ci-dessus, est essentiellement caractérisé en ce que pour au moins une position de commutation les moyens de commutation sont couplés à un commutateur unique et en ce que le commutateur unique est câblé dans au moins deux boucles de sorte que lors d'un changement de position de commutation, le dispositif d'entrée génère un signal d'ouverture d'un contact dans une première boucle et la fermeture d'un contact dans une seconde boucle par le même commutateur.

Par ailleurs, l'invention peut comporter l'une ou plusieurs des caractéristiques suivantes :
- le commutateur unique est câblé dans au moins trois boucles de sorte que l'un des contacts du commutateur unique est relié à deux boucles parallèles
- le commutateur unique est un commutateur du type, par exemple, microrupteur,
- les moyens de commutation ont deux positions de commutation, chacune couplée à un commutateur unique respectif,
- les moyens de commutation ont trois positions de commutation, dont deux sont couplées respectivement à deux commutateurs uniques,
- les moyens de commutation forment un bouton à trois positions,
- le commutateur est câblé de façon que les signaux d'ouverture et de fermeture d'un contact du commutateur sont aptes à délivrer des signaux correspondant des changements d'impédance,
- lorsque le commutateur unique est en position de repos, chacun des câbles des boucles, dans lesquelles le commutateur unique est disposé, peut être traversé par un courant électrique pour permettre de détecter toute anomalie de câblage,
- chacun des câbles des boucles, dans lesquelles le commutateur unique est disposé, est relié à au moins une résistance.

Un autre but de l'invention est de proposer un véhicule comprenant un système de frein de stationnement électrique caractérisé en ce qu'il comporte un dispositif pour commander le frein de stationnement électrique selon l'une quelconque des caractéristiques ci-dessus.

D'autres particularités et avantages apparaîtront à la lecture de la description ci-après, faite en référence aux figures dans lesquelles :
- la figure 1 représente schématiquement un détail d'un un dispositif pour commander un frein de stationnement électrique selon un premier mode de réalisation de l'invention,
- la figure 2 représente schématiquement un détail d'un un dispositif pour commander un frein de stationnement électrique selon un second mode de réalisation de l'invention,
- la figure 3 représente schématiquement un détail d'un un dispositif pour commander un frein de stationnement électrique selon une variante du second mode de réalisation de l'invention.

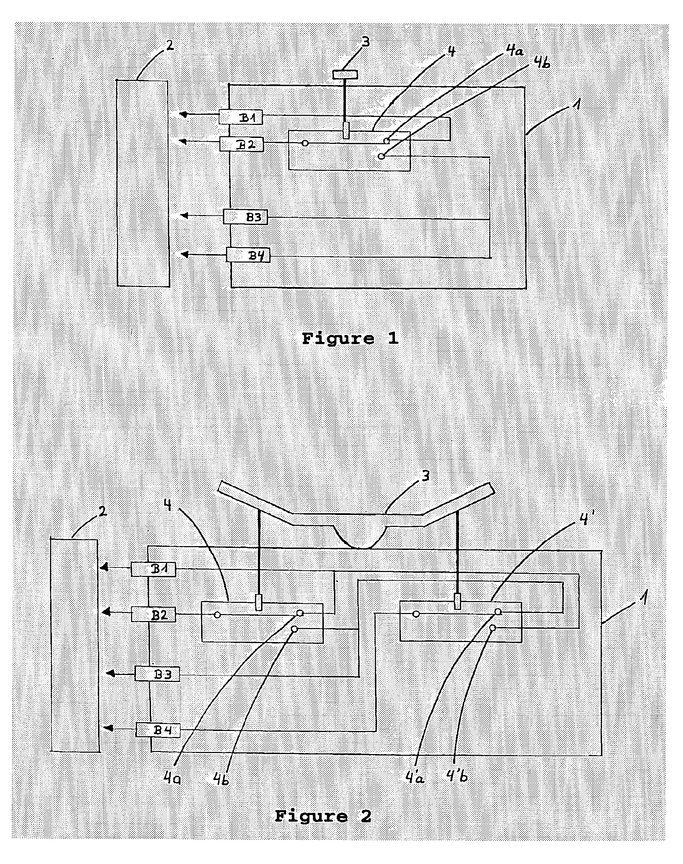

Le dispositif pour commander un frein de stationnement électrique, représenté dans différents modes de réalisation aux figures 1 à 3, comporte un dispositif d'entrée 1 et un organe de commande 2 électronique.

Le dispositif d'entrée 1 sert à enregistrer un souhait d'un utilisateur concernant un actionnement du frein de stationnement, notamment le serrage et le desserrage du frein.

Pour la détection et l'exécution du souhait de l'utilisateur, le dispositif d'entrée est relié à l'organe de commande 2 électronique. L'organe de commande 2 électronique comprend habituellement un calculateur électronique. De tels calculateurs sont bien connus de l'homme du métier et ne sont donc pas décrits en détail.

L'organe de commande 2 électronique reçoit des signaux de commande, exprimant le souhait de l'utilisateur, du dispositif d'entrée 1 et les transforme en signaux d'exécution d'un frein de stationnement.

Selon un premier mode de réalisation, représenté à la figure 1, le dispositif pour commander un frein de stationnement électrique comporte des moyens de commutation 3, tels qu'un bouton-poussoir 3. Ce bouton-poussoir 3 peut être disposé dans deux positions de commutation : une position stable, dit de repos, et une position instable, dit d'actionnement. Par position instable on comprend une position qui n'est maintenue que pendant une période prédéterminé afin de revenir automatiquement dans une position stable, qui est, elle, non limitée dans le temps. Bien entendu, l'invention ne se limite pas à l'utilisation d'un bouton-poussoir 3, tout autre moyen de commutation 3 remplissant les mêmes fonctions peut également être utilisé, tel qu'une palette, un levier ou une tirette.

A la figure 1, le bouton-poussoir 3 se trouve en position de repos. L'actionnement du bouton-poussoir 3 entraîne un changement d'état du frein de stationnement 3. C'est à dire que le frein est desserré lorsqu'il a été serré auparavant et il est serré lorsqu'il a été desserré auparavant.

Le bouton poussoir 3 est relié à un commutateur 4 unique, par exemple du type microrupteur. Le commutateur 4 unique comporte deux contacts, 4a et 4b, dont l'un est fermé lorsque l'autre est ouvert et inversement. Un premier contact 4a est fermé, lorsque la commande n'est pas actionnée, et ouvert lors d'un actionnement de la commande. Un second contact 4b est ouvert lorsque la commande n'est pas actionnée, et fermé lors d'un actionnement de la commande.

Le bouton-poussoir 3 est lié mécaniquement avec le commutateur 4 unique, de sorte que ce dernier a deux positions de commutation : une première position stable, dit de repos, dans laquelle le premier contact 4a est fermé et le second 4b ouvert, et une seconde position instable, dit d'actionnement, dans laquelle le premier contact 4a est ouvert et le second 4b fermé.

Le changement du commutateur 4 unique de position stable en position instable génère des signaux électriques indiquant un changement d'état du frein de stationnement. Ces signaux électriques sont transmis au dispositif de commande 2 électronique.

L'organe de commande 2 électronique comporte par exemple des moyens permettant l'enregistrement du dernier actionnement, serrage ou desserrage, du frein. Cela permet d'identifier le souhait de l'utilisateur lors de la réception de signaux d'actionnement du dispositif d'entrée 1.

De plus, le commutateur 4 unique est câblé dans au moins deux boucles de sorte que lors d'un changement de position de commutation, le dispositif d'entrée 1 génère deux signaux, un signal d'ouverture d'un des contacts 4a, 4b du commutateur 4 dans une première boucle et un signal de fermeture de l'autre contact 4a, 4b dans une seconde boucle.

Avantageusement, comme représenté à la figure 1, le premier contact 4a est câblé dans une seule boucle, B1-B2, et le second contact 4b est câblé dans deux boucles parallèles, B2-B3 et B2-B4. Cet agencement permet de faire passer un courant électrique dans chaque câble lorsque le commutateur 4 unique est en position stable de repos.

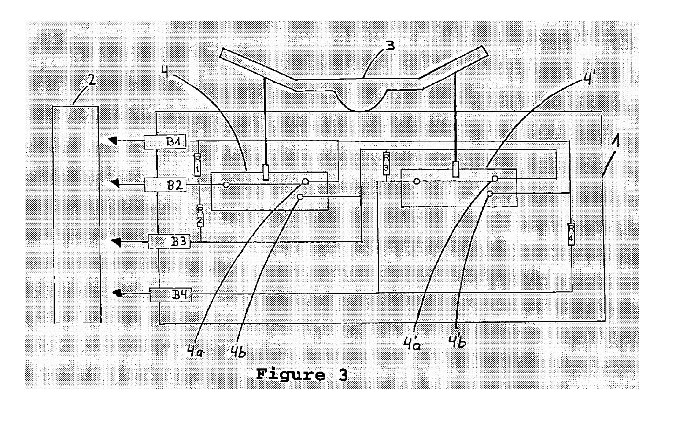

Les figures 2 et 3 représentent un second mode de réalisation d'un dispositif pour commander un frein de stationnement électrique selon l'invention. Dans ce mode de réalisation, les moyens de commutation 3 sont agencés de façon à permettre trois positions de commutation : une première position stable, dit de repos, une seconde position instable, par exemple de serrage, et une troisième position instable, par exemple de desserrage. II se comprend que lorsque l'une des deux positions instables correspond au serrage, l'autre position instable correspond au desserrage et vice versa.

Comme représentés aux figures 2 et 3, les moyens de commutation 3 peuvent former avantageusement une touche basculante 3 à trois positions. La touche basculante 3 est reliée au niveau de chacune de ses extrémités latérales à un commutateur 4, 4' unique respectif. L'interaction entre la touche basculante 3 et chacun des commutateurs 4, 4' uniques et le fonctionnement de chacun de ces commutateurs 4, 4' uniques correspondent à ce qui a été décrit pour le premier mode de réalisation représenté à la figure 1. Bien entendu, l'invention ne se limite pas à l'utilisation d'une touche basculante 3, tout autre moyens de commutation 3 remplissant les mêmes fonctions peut également être utilisé, tel qu'un levier, un bouton rotatif ou une tirette.

De préférence, la touche basculante 3 et les commutateurs 4, 4' uniques sont agencés de façon que, lorsque la touche basculante 3 est en position stable, c'est à dire au repos, les deux commutateurs 4, 4' uniques respectifs sont également en position stable. Les contacts 4a et 4'a sont donc fermés. Lorsque l'utilisateur bascule la touche 3 dans l'une des deux positions instables, seulement l'un des deux commutateurs 4, 4' uniques change d'état. Par exemple, lorsque le basculement de la touche 3 entraîne le commutateur 4 en position instable, l'autre commutateur 4' reste en position stable et vice versa.

De plus, chacun des commutateurs 4, 4' uniques est également câblé dans au moins deux boucles comme décrit ci dessus pour le premier mode de réalisation de la figure 1. Avantageusement, le câblage est effectué de façon à utiliser un minimum de fils tout en assurant la génération de deux signaux lorsque l'un des deux commutateurs 4, 4' uniques change d'état. C'est-à-dire que le changement d'état d'un commutateur 4, 4' génère un signal d'ouverture d'un des contacts du commutateur 4 ou 4' dans une première boucle et un signal de fermeture de l'autre contact du même commutateur 4 ou 4' dans une seconde boucle.

De préférence, chacun des premiers contacts 4a et 4'a respectifs est câblé dans une seule boucle, B1-B2 pour le premier contact 4a du premier commutateur 4 et B4-B3 pour le premier contact 4'a du second commutateur 4', et chacun des seconds contacts 4b et 4'b respectifs est câblé dans deux boucles parallèles, B2-B3 et B2-B4 pour le second contact 4b du premier commutateur 4 et B4-B1 et B4-B2 pour le second contact 4'b du second commutateur 4'. Cet agencement permet de faire passer un courant électrique dans chaque câble lorsque les deux commutateurs 4, 4' unique sont chacun en position stable.

Dans une variante du second mode de réalisation, représentée à la figure 3, des résistances électriques R1 à R4 sont disposées dans la commande de façon que chacun des câbles des boucles, comportant un commutateur 4, 4' unique, est relié à au moins une des résistances R1 à R4. Des mesures du potentiel au niveau des résistances permettent une détection et une localisation plus détaillée des éventuels anomalies électriques dans le câblage du dispositif d'entrée 1, par exemple des ruptures de câble. Chaque boucle de courant comprend une résistance de diagnostic. L'état des boucles correspond à un niveau d'impédance donné. Dès que l'une des impédances détectées sort de la tolérance donnée par les composants, le dispositif détecte une anomalie sur la boucle correspondante.

Le dispositif pour commander un frein de stationnement électrique selon l'invention présente plusieurs avantages par rapport au dispositif connu. En comparaison du dispositif connu, dans lequel les commutateurs sont agencés de façon redondante et disposés dans des plans de commutation fonctionnant en parallèle, le coût du dispositif selon l'invention est réduit puisque le nombre de composants est réduit. De plus la réduction du nombre de pièces diminue le risque de pannes et améliore donc la fiabilité du système.

L'utilisation de commutateurs uniques, et non d'une pluralité de commutateurs agencés de façon redondante dans des plans de commutation parallèles, permet d'éviter le problème de la synchronisation du basculement des commutateurs redondants du dispositif connu.

En outre, le dispositif selon l'invention permet une détection immédiate d'une rupture interne du commutateur unique, ce qui n'est pas le cas pour le dispositif connu. En effet une rupture interne du commutateur interrompt le courrant dans la boucle à laquelle appartient le contact fermé dans sa position de repos. La cohérence entre cette modification de signal et le signal de la seconde boucle permet de distinguer une défaillance d'une demande d'actionnement par le client. On voit que cette détection ne nécessite pas de composant électronique supplémentaire (résistance). Or, dans le cas du dispositif connu la défaillance décrite ci-dessus est détectée grâce à des résistance de diagnostic.

## Revendications

1. Dispositif pour commander un frein de stationnement électrique comportant un dispositif d'entrée (1) pour enregistrer un souhait d'un utilisateur concernant un actionnement du frein de stationnement, un organe de commande (2) électronique pour détecter le souhait de l'utilisateur au moyen de signaux correspondant du dispositif d'entrée (1) et pour commander au moins un frein de stationnement, le dispositif d'entrée (1) comportant des moyens de commutation (3) électriques ayant plusieurs positions de commutation, **caractérisé en ce que**, pour au moins une position de commutation, les moyens de commutation (3) sont couplés à un commutateur (4, 4') unique et **en ce que** le commutateur (4, 4') unique est câblé dans au moins deux boucles, de sorte que, lors d'un changement de position de commutation, le dispositif d'entrée génère un signal d'ouverture d'un contact dans une première boucle et la fermeture d'un contact dans une seconde boucle par le même commutateur (4, 4').

2. Dispositif selon la revendication 1 **caractérisé en ce que** le commutateur (4, 4') unique est câblé dans au moins trois boucles de sorte que l'un des contacts du commutateur (4, 4') unique est relié à deux boucles parallèles.

3. Dispositif selon l'une quelconque des revendications 1 ou 2 **caractérisé en ce que** le commutateur (4, 4') unique est un commutateur du type, par exemple, microrupteur.

4. Dispositif selon l'une quelconque des revendications 1 à 3 **caractérisé en ce que** les moyens de commutation (3) ont deux positions de commutation, chacune couplée à un commutateur (4, 4') unique respectif.

5. Dispositif selon l'une quelconque des revendications 1 à 3 **caractérisé en ce que** les moyens de commutation (3) ont trois positions de commutation, dont deux sont couplées respectivement à deux commutateurs (4, 4') uniques.

6. Dispositif selon la revendication 5 **caractérisé en ce que** les moyens de commutation (3) forment un bouton à trois positions.

7. Dispositif selon l'une quelconque des revendications 1 à 6 **caractérisé en ce que** le commutateur (4, 4') est câblé de façon que les signaux d'ouverture et de fermeture d'un contact du commutateur (4, 4') sont aptes à délivrer des signaux correspondant à des changements d'impédance.

8. Dispositif selon l'une quelconque des revendications 1 à 7 **caractérisé en ce que**, lorsque le commutateur (4, 4') unique est en position de repos, chacun des câbles des boucles, dans lesquelles le commutateur (4, 4') unique est disposé, peut être traversé par un courant électrique pour permettre de détecter toute anomalie de câblage.

9. Dispositif selon l'une quelconque des revendications 1 à 8 **caractérisé en ce que** chacun des câbles des boucles, dans lesquelles le commutateur (4, 4') unique est disposé, est relié à au moins une résistance (R1-R4).

10. Véhicule comportant un système de frein de stationnement électrique **caractérisé en ce qu'**il comporte un dispositif pour commander un frein de stationnement électrique selon l'une quelconque des revendications précédentes.

## Claims

1. Device for controlling an electric parking brake comprising an input device (1) for saving a wish of a user concerning an actuation of the parking brake, an electronic control device (2) for detecting the wish of the user by means of corresponding signals of the input device (1) and for controlling at least one parking brake, the input device (1) comprising electric switching means (3) having several switching positions, **characterized in that**, for at least one switching position, the switching means (3) are coupled to a single switch (4, 4') and **in that** the single switch (4, 4') is wired in at least two loops, such that, on a change of switching position, the input device generates a signal to open a contact in a first loop and the closure of a contact in a second loop by the same switch (4, 4').

2. Device according to Claim 1, **characterized in that** the single switch (4, 4') is wired in at least three loops, such that one of the contacts of the single switch (4, 4') is linked to two parallel loops.

3. Device according to either of Claims 1 or 2, **characterized in that** the single switch (4, 4') is a switch of the microswitch type, for example.

4. Device according to any one of Claims 1 to 3, **characterized in that** the switching means (3) have two switching positions, each coupled to a respective single switch (4, 4').

5. Device according to any one of Claims 1 to 3, **characterized in that** the switching means (3) have three switching positions, two of which are respectively coupled to two single switches (4, 4') .

6. Device according to Claim 5, **characterized in that** the switching means (3) form a three-position knob.

7. Device according to any one of Claims 1 to 6, **characterized in that** the switch (4, 4') is wired so that the signals for opening and closing a contact of the switch (4, 4') are able to deliver signals corresponding to changes of impedance.

8. Device according to any one of Claims 1 to 7, **characterized in that**, when the single switch (4, 4') is in the rest position, each of the cables of the loops, in which the single switch (4, 4') is positioned, can be passed through by an electric current to enable any wiring anomaly to be detected.

9. Device according to any one of Claims 1 to 8, **characterized in that** each of the cables of the loops, in which the single switch (4, 4') is positioned, is linked to at least one resistor (R1-R4).

10. Vehicle comprising an electric parking brake system, **characterized in that** it comprises a device for controlling an electric parking brake according to any one of the preceding claims.

## Patentansprüche

1. Vorrichtung zur Steuerung einer elektrischen Feststellbremse, die eine Eingangsvorrichtung (1) zum Speichern eines Wunschs eines Benutzers betreffend eine Betätigung der Feststellbremse und ein elektronisches Steuerorgan (2) aufweist, um den Wunsch des Benutzers mittels entsprechender Signale der Eingangsvorrichtung (1) zu erfassen und um mindestens eine Feststellbremse zu steuern, wobei die Eingangsvorrichtung (1) elektrische Schaltmittel (3) aufweist, die mehrere Schaltstellungen haben, **dadurch gekennzeichnet, dass** für mindestens eine Schaltstellung die Schaltmittel (3) mit einem einzigen Schalter (4, 4') gekoppelt sind und dass der einzige Schalter (4, 4') in mindestens zwei Schleifen verkabelt ist, so dass bei einer Änderung der Schaltstellung die Eingangsvorrichtung ein Öffnungssignal eines Kontakts in einer ersten Schleife und das Schließen eines Kontakts in einer zweiten Schleife durch den gleichen Schalter (4, 4') erzeugt.

2. Vorrichtung nach Anspruch 1, **dadurch gekennzeichnet, dass** der einzige Schalter (4, 4') in mindestens drei Schleifen verkabelt ist, so dass einer der Kontakte des einzigen Schalters (4, 4') mit zwei parallelen Schleifen verbunden ist.

3. Vorrichtung nach einem der Ansprüche 1 oder 2, **dadurch gekennzeichnet, dass** der einzige Schalter (4, 4') ein Schalter zum Beispiel vom Typ Mikroschalter ist.

4. Vorrichtung nach einem der Ansprüche 1 bis 3, **dadurch gekennzeichnet, dass** die Schaltmittel (3) zwei Schaltstellungen haben, die je mit einem einzigen Schalter (4, 4') gekoppelt sind.

5. Vorrichtung nach einem der Ansprüche 1 bis 3, **dadurch gekennzeichnet, dass** die Schaltmittel (3) drei Schaltstellungen haben, von denen zwei je mit zwei einzigen Schaltern (4, 4') gekoppelt sind.

6. Vorrichtung nach Anspruch 5, **dadurch gekennzeichnet, dass** die Schaltmittel (3) einen Knopf mit drei Stellungen bilden.

7. Vorrichtung nach einem der Ansprüche 1 bis 6, **dadurch gekennzeichnet, dass** der Schalter (4, 4') so verkabelt ist, dass die Öffnungs- und Schließsignale eines Kontakts des Schalters (4, 4') fähig sind, Signale zu liefern, die Impedanzänderungen entsprechen.

8. Vorrichtung nach einem der Ansprüche 1 bis 7, **dadurch gekennzeichnet, dass**, wenn der einzige Schalter (4, 4') sich in Ruhestellung befindet, jedes der Kabel der Schleifen, in denen der einzige Schalter (4, 4') angeordnet ist, von einem elektrischen Strom durchflossen werden kann, um jede Verkabelungsanomalie erfassen zu können.

9. Vorrichtung nach einem der Ansprüche 1 bis 8, **dadurch gekennzeichnet, dass** jedes der Kabel der Schleifen, in denen der einzige Schalter (4, 4') angeordnet ist, mit mindestens einem Widerstand (R1-R4) verbunden ist.

10. Fahrzeug, das ein elektrisches Feststellbremssystem aufweist, **dadurch gekennzeichnet, dass** es eine Vorrichtung aufweist, um eine elektrische Feststellbremse nach einem der vorhergehenden Ansprüche zu steuern.
